# EUROPÄISCHE PATENTSCHRIFT

(11) **EP 2 823 943 B1**
(45) Veröffentlichungstag und Bekanntmachung des Hinweises auf die Patenterteilung: **30.12.2015**
(21) Anmeldenummer: 14166840.0
(22) Anmeldetag: 02.05.2014
(51) Int. Cl.: B26D 1/24, B26D 7/26, B23D 19/06, B26D 1/00

(54) **Vorrichtung und Verfahren zum Längsteilen einer durchlaufenden Materialbahn**
Device and method for slitting a web of material
Dispositif et procédé destiné à la coupe longitudinale d'une bande de matériau continue

(30) Priorität: 09.07.2013 DE 102013213426
(43) Veröffentlichungstag der Anmeldung: 14.01.2015
(73) Patentinhaber: Achenbach Buschhütten GmbH & Co. KG, 57223 Kreuztal (DE)
(72) Erfinder: Barten, Axel, 57223 Kreuztal (DE); Brenner, Richard, 57482 Wenden (DE); Stahl, André, 57223 Kreuztal (DE); Kühn, Andreas, 57078 Siegen (DE)
(74) Vertreter: advotec.

(56) Entgegenhaltungen:
- EP-A2- 1 190 785
- US-A- 3 279 296
- US-A- 4 885 964

## Beschreibung

Die Erfindung betrifft eine Vorrichtung zum Längsteilen einer zwischen einer ersten und einer zweiten Messerwelle durchlaufenden Materialbahn nach dem Oberbegriff des Anspruchs 1

Des Weiteren betrifft die Erfindung ein Verfahren zum Längsteilen einer zwischen einer ersten und einer zweiten Messerwelle durchlaufenden Materialbahn nach dem Oberbegriff des Anspruchs 7.

Vorrichtungen der eingangs genannten Art werden zur Durchführung sogenannter "Rollscherenschnitte" eingesetzt, bei denen zur Ausbildung einer Schnittkante auf parallel zueinander angeordneten Messerwellen angeordnete Kreismesser mit ihren Schneidkanten eine Überdeckung miteinander ausbilden und bei Einstellung einer in Abhängigkeit von der Materialdicke und den Materialeigenschaften abhängigen Spaltbreite saubere und im Wesentlichen parallel zueinander verlaufende und gradlinige Schnittkanten erzeugen. Hierdurch ermöglichen entsprechende Vorrichtungen die Längsteilung von durchlaufenden Materialbahnen in eine Vielzahl von Bahnstreifen, die in ihrer Gesamtbreite im Wesentlichen der Breite der Materialbahn entsprechen, da bei der Längsteilung durch Rollscherenschnitt im Wesentlichen kein oder allenfalls im Bereich der Außenränder der Materialbahn ein Verschnitt entsteht und somit die Breite der Materialbahn im Wesentlichen vollständig zur Ausbildung von Bahnstreifen genutzt werden kann.

Voraussetzung für den optimalen Einsatz einer entsprechenden Vorrichtung ist allerdings, dass bei der Vielzahl längs den Messerwellen axial voneinander beabstandeten Kreismesserpaarungen eine konstant gleiche Spaltbreite eingestellt wird. Hierzu ist es notwendig, dass ein fertigungsbedingt regelmäßig nicht vermeidbarer axialer Versatz zwischen den Messerwellen ausgeglichen wird, um an beiden Messerwellen einen jeweils übereinstimmenden axialen Bezugspunkt für den auf dem Grundkörper angeordneten Schneidsatz, also die sequentielle Anordnung von Kreismessern mit den jeweils dazwischen liegend angeordneten Zwischenelementen, zu definieren. Regelmäßig ist auch zu beobachten, dass aufgrund von Temperatureinflüssen und hierdurch bedingten unterschiedlichen thermischen axialen Ausdehnungen ein axialer Versatz zwischen den Messerwellen entsteht.

Insbesondere bei sehr geringen Materialstärken des Bahnmaterials, also auch entsprechend geringen Spaltbreiten zwischen den Schneidkanten der Kreismesser einer Kreismesserpaarung wirkt sich dieser axiale Versatz erheblich auf die Spaltbreiten aus.

Zur Kompensation dieses axialen Versatzes der Messerwellen ist es bisher üblich, auf den Grundkörpern der beiden Messerwellen zwischen dem Anschlagbund und dem ersten Kreismesser Ausgleichsringe anzuordnen, deren Breite dem auszugleichenden axialen Versatz entspricht, so dass bei einer Änderung des axialen Versatzes eingebaute Ausgleichsringe gegen entsprechend geänderte, also breitere oder schmalere Ausgleichsringe ausgetauscht werden müssen.

Die bekannte Art der Kompensation des axialen Versatzes mittels Ausgleichsringen erweist sich als entsprechend aufwendig; insbesondere da nachfolgend der Ermittlung der notwendigen Breite der Ausgleichsringe in einem ersten Schritt nachfolgend, in einem zweiten Schritt, der gesamte Schneidsatz erst wieder vom Grundkörper entfernt werden muss, bevor dann anschließend ein Ausgleichsring mit entsprechender Breite im Austausch gegen den eingebauten Ausgleichsring gegen den Anschlagbund des Grundkörpers positioniert und dann der Schneidsatz wieder gegen den Ausgleichsring positioniert werden kann.

Aus der US 4 885 964 A ist ein Verfahren zum Längsteilen einer zwischen einer ersten und einer zweiten Messerwelle durchlaufenden Materialbahn bekannt, bei dem die Messerwellen jeweils auf einem Grundkörper mit mindestens zwei durch zumindest ein Zwischenelement voneinander beabstandeten Kreismessern bestückt sind. Zur Einstellung eines Schneidspalts definierter Spaltbreite zwischen zwei einander zugeordneten Kreismessern einer Kreismesserpaarung erfolgt eine relative axiale Verstellung der ersten Messerwelle gegenüber der zweiten Messerwelle.

Der vorliegenden Erfindung liegt die Aufgabe zugrunde, eine Vorrichtung zum Längsteilen einer durchlaufenden Materialbahn vorzuschlagen, die die Kompensation des axialen Versatzes zwischen den Messerwellen vereinfacht bzw. ein Verfahren zum Längsteilen einer durchlaufenden Materialbahn vorzuschlagen, dass die Verwendung von Ausgleichsringen zur Kompensation eines axialen Versatzes zwischen den Messerwellen erübrigt.

Zur Lösung dieser Aufgabe weist die erfindungsgemäße Vorrichtung die Merkmale des Anspruchs 1 und das erfindungsgemäße Verfahren die Merkmale des Anspruchs 7 auf.

Erfindungsgemäß ist die erste Messerwelle auf einem Schneidgestell und die zweite Messerwelle auf einem gegenüber dem Schneidgestell axial verstellbaren Messerwellenträger angeordnet, wobei zwischen dem Schneidgestell und dem Messerwellenträger eine Stelleinrichtung angeordnet ist, mit einem ersten, an dem Schneidgestell angebrachten Stellanschlag, einem zweiten, am Messerwellenträger angebrachten Stellanschlag und einem zwischen den Stellanschlägen wirksamen Stellelement, mit dem der Abstand zwischen den Stellanschlägen derart veränderbar ist, dass Bezugskanten der Anschlagbünde der Messerwellen axial gegeneinander verstellbar sind.

Die erfindungsgemäße Vorrichtung ermöglicht somit die Kompensation eines axialen Versatzes der Messerwellen durch axiale Nachstellung einer der beiden Messerwellen, ohne dass hierzu die Verwendung eines Ausgleichsrings notwendig wäre.

Damit ist es möglich, die Kompensation des axialen Versatzes ohne eine erneute Bestückung des Grundkörpers der Messerwelle mit dem Schneidsatz der Messerwelle durchzuführen. Insbesondere ist es sogar möglich, die Kompensation des axialen Versatzes in situ, also während der Längsteilung einer durchlaufenden Materialbahn durchzuführen, um das Ausmaß der geeigneten Kompensation anhand des Schneidresultats, also anhand des Erscheinungsbildes der an den Bahnstreifen ausgebildeten Schnittkanten, überprüfen zu können, sodass die Einstellung der geeigneten Kompensation in einem iterativen Verfahren während des Betriebs der Vorrichtung durchführbar ist.

Vorzugsweise ist der Abstand zwischen den Stellanschlägen derart veränderbar, dass die Bezugskanten der Anschlagbünde der beiden Messerwellen in einer gemeinsamen Bezugsebene angeordnet werden können.

Bei einer bevorzugten Ausführungsform der Vorrichtung besteht das Stellelement aus einer drehfest am ersten Stellanschlag angeordneten Stellspindel, die mittels einer im zweiten Stellanschlag drehbar gelagerten Spindelmutter antreibbar ist, sodass eine möglichst exakte relative Linearführung in axialer Richtung realisierbar ist und der Verstellweg parallel zu den Achsen der Messerwellen definiert ist.

Besonders bevorzugt ist es, wenn die Spindelmutter mit einem axialen Ende drehfest mit dem ersten Stellanschlag verbunden ist und mit dem anderen axialen Ende drehbar auf einer koaxial zur Spindelmutter angeordneten Antriebswelle eines am zweiten Stellanschlag angeordneten, die Spindelmutter antreibenden Stellgetriebes angeordnet ist, sodass durch die koaxiale Anordnung der Antriebswelle zur Spindelmutter einerseits und zur Stellspindel andererseits ein Höchstmaß an Parallelität der Achsen der Stelleinrichtung gegeben ist. Darüber hinaus ergibt sich ein kompakter und somit steifer Gesamtaufbau der Stelleinrichtung.

Wenn die drehfeste Verbindung der Stellspindel mit dem ersten Stellanschlag als lösbare Klemmverbindung ausgebildet ist, ist ein von Verspannungen weitestgehend freie mechanische Verbindung der Stellanschläge realisierbar.

Eine besonders steife und damit der Ausbildung von Parallelitätsfehlern zwischen der Bewegungsachse der Stelleinrichtung und den Achsen der Messerwellen entgegenwirkende Anordnung wird möglich, wenn die Länge der axialen Gewindeüberdeckung zwischen der Stellspindel und der Stellmutter zumindest 80 % des Durchmessers der Stellspindel beträgt.

Das erfindungsgemäße Verfahren zum Längsteilen einer zwischen einer ersten und einer zweiten Messerwelle durchlaufenden Materialbahn, ermöglicht den Verzicht auf die bislang notwendigen Ausgleichsringe und erfolgt derart, dass zum Ausgleich einer zwischen den Schneidspalten festgestellten Spaltbreitendifferenz mittels einer axialen Stelleinrichtung eine relative axiale Verstellung der ersten Messerwelle gegenüber der zweiten Messerwelle derart erfolgt, dass die Spaltbreitendifferenz innerhalb eines definierten Toleranzbereichs liegt. Dabei erfolgt die axiale Verstellung derart, dass ein Messerwellenträger, auf dem die zweite Messerwelle angeordnet ist, mittels der Stelleinrichtung gegenüber einem Schneidgestell, auf dem die erste Messerwelle angeordnet ist, axial verfahren wird

Das erfindungsgemäße Verfahren ermöglicht es, durch eine mittels der Stelleinrichtung ausgeführte axiale Verstellung einer Messerwelle die festgestellte, insbesondere aufgrund eines axialen Versatzes der Messerwellen entstandene Spaltbreitendifferenz zu kompensieren. Dabei kann die Verstellung mit der Maßgabe erfolgen, dass die unter Berücksichtigung der Fertigungstoleranzen der einzelnen Bauteile der Messerwellen und der sich daraus ergebenden Maßketten an den einzelnen Kreismesserpaarungen tatsächlich unterschiedlich groß ausgebildeten Spaltbreitendifferenzen vermittelt werden, also nicht eine axiale Rückstellung der Messerwelle 13 um den Betrag |dx| des axialen Versatzes, sondern um einen Betrag erfolgt, derart, dass eine möglichst an sämtlichen Kreismesserpaarungen bis auf tolerierbare Abweichungen übereinstimmende Spaltbreitendifferenz erreicht wird.

Vorzugsweise erfolgt die axiale Verstellung mittels der Stelleinrichtung derart, dass durch einen Anschlagbund der jeweiligen Messerwelle gebildete Bezugskanten in einer gemeinsamen, senkrecht zu einer Messerwellenebene orientierten Bezugsebene angeordnet werden.

Wenn das axiale Verfahren des Messerwellenträgers gegenüber dem Schneidgestell derart erfolgt, dass der Abstand zwischen einem ersten, an dem Schneidgestell angebrachten Stellanschlag und einem zweiten, am Messerwellenträger angebrachten Stellanschlag mittels eines zwischen den Stellanschlägen wirksamen Stellelements eingestellt wird, wird die Nutzung des ohnehin vorhandenen Schneidgestell als Referenzeinrichtung für die Einstellung des Abstands ermöglicht, sodass auf zusätzliche Einrichtungen als Gestell oder Träger für die Stelleinrichtung verzichtet werden kann und die Durchführung des Verfahrens mittels einer besonders kompakt ausgebildeten Vorrichtung möglich wird.

Nachfolgend wird eine bevorzugte Ausführungsform der Vorrichtung mit Erläuterung des Verfahrens zur Längsteilung einer laufenden Materialbahn anhand der Zeichnung näher erläutert.

Es zeigen:
- **Fig. 1**: Eine Messerwellenanordnung der Vorrichtung mit zwei mit einem axialen Versatz zueinander angeordneten Messerwellen;
- **Fig. 2**: eine vergrößerte Teildarstellung der Messerwellenanordnung;
- **Fig. 3**: die in **Fig. 1** dargestellte Messerwellenanordnung mit einem durch axiale Verstellung einer Messerwelle kompensierten axialen Versatz;
- **Fig. 4**: eine Schneidvorrichtung zum Längsteilen einer durchlaufenden Materialbahn in isometrischer Darstellung mit einer zwischen einem Messerwellenträger und einem Schneidgestell angeordneten Stelleinrichtung;
- **Fig. 5**: die in **Fig. 4** dargestellte Stelleinrichtung in Einzeldarstellung;
- **Fig. 6**: die in **Fig. 5** dargestellte Stelleinrichtung in einem Teillängsschnitt gemäß Schnittlinienverlauf VI-VI in **Fig. 5**.

**Fig**. **1** zeigt eine Messerwellenanordnung 10 für die in **Fig**. **4** dargestellte Schneidvorrichtung 11 zum Längsteilen einer nicht dargestellten durchlaufenden Materialbahn. Die Messerwellenanordnung 10 weist zwei parallel zueinander angeordnete Messerwellen 12 und 13 auf, die jeweils auf einem Grundkörper 14 mit einem Schneidsatz 15 bzw. 16 bestückt sind.

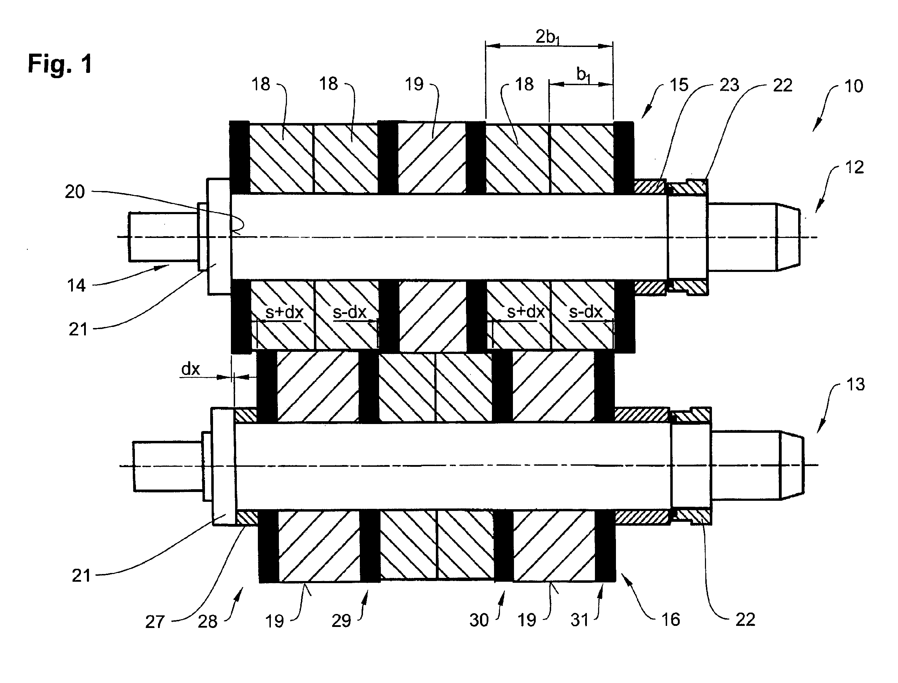

Der Schneidsatz 15 der Messerwelle 12 weist im Falle des dargestellten Ausführungsbeispiels vier Kreismesser 17 auf, die durch Zwischenelemente 18, 19 voneinander beabstandet sind und zur Bestückung des Grundkörpers 14 mit dem Schneidsatz 15 in der in der **Fig**. **1** dargestellten definierten Reihenfolge auf dem Grundkörper 14 angeordnet werden, wobei eine axiale Bezugskante 20 für die Anordnung des Schneidsatzes 15 auf dem Grundkörper 14 durch einen in **Fig. 1** am linken Ende des Grundkörpers 14 ausgebildeten Anschlagbund 21 definiert ist. Zur Sicherung der axialen Anordnung des Schneidsatzes 15 auf dem Grundkörper 14 ist der Grundkörper 14 an seinem dem Anschlagbund 21 gegenüberliegenden Ende mit einer Wellenmutter 22 versehen, die unter zwischenliegender Anordnung eines Distanzrings 23 den Schneidsatz 15 vorgespannt gegen den Anschlagbund 21 hält.

Wie **Fig. 1** zu entnehmen ist, weist der Schneidsatz 16 der Messerwelle 13 eine gegenüber dem Schneidsatz 15 abweichende axiale Anordnung der Kreismesser 17 mit den Zwischenelementen 18 und 19 auf, derart, dass jeweils zwei zwischen zwei Kreismessern 17 des Schneidsatzes 15 angeordnete Zwischenelemente 18, die, wie **Fig**. **2** zeigt, im vorliegenden Fall mit ihrer Gesamtbreite 2b₁ die Breite eines mittels der Schneidvorrichtung 11 aus einer nicht dargestellten Materialbahn durch Längsteilung herauszutrennenden Bahnstreifens bestimmen, gegenüberliegend einem zwischen zwei Kreismessern 17 des Schneidsatzes 16 angeordneten Zwischenelement 19 angeordnet sind.

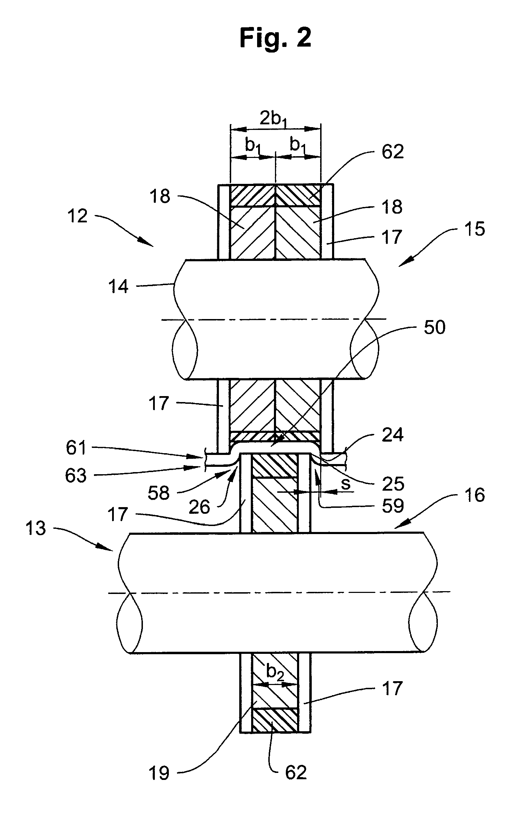

**Fig. 2** zeigt in einer vergrößerten Teildarstellung der Messerwellenanordnung 10 eine Anfangsphase der Ausbildung von Rollscherenschnitten 58, 59 in einem zwischen den Messerwellen 12, 13 ausgebildeten Einzugsspalt 63, wobei die Rollscherenschnitte 58, 59 zum Herstellung eines Bahnstreifens 60 aus einer Materialbahn 61 dienen. Die Zwischenelemente sind mit einem elastisch nachgiebigen Belag 62 versehen, der während der Ausbildung der Rollscherenschnitte 58, 59 für eine definierte Anlage der Materialbahn 61 gegen die Kreismesser 17 sorgt.

Der elastische Belag 62 ermöglicht das radiale Eintauchen der Kreismesser 17 des Schneidsatzes 16 in den durch die Zwischenelemente 18 definierten Zwischenraum der gegenüberliegenden Kreismesser 17 des Schneidsatzes 15, wobei sich beim Durchlaufen der Materialbahn 61 durch den Einzugsspalt 63 zwischen benachbarten Schneidkanten 24, 25 einander zugeordneter Kreismesser 17 der Schneidsätze 15, 16 eine zunehmende radiale Überdeckung zwischen den Kreismessern 17 ausbildet. Weiterhin ist aufgrund der geringeren Breite b₂ der Zwischenelemente 19 gegenüber der Breite b₁ der Zwischenelemente 18 zwischen einander zugeordneten und mit ihren Schneidkanten 24, 25 einander überdeckenden Kreismessern 17 ein Schneidspalt 26 mit einer Spaltbreite s ausgebildet.

Wie **Fig. 1** zeigt, ist zwischen dem Anschlagbund 21 des Grundkörpers 14 der Messerwelle 13 und dem nächstliegend dem Anschlagbund 21 angeordneten Kreismesser 17 des Schneidsatzes 16 ein Distanzring 27 angeordnet, der die Einstellung des Schneidspaltes 26 (**Fig. 2**) einer Kreismesserpaarung 28 zwischen dem ersten Kreismesser 17 der Messerwelle 12 und dem Kreismesser 17 der Messerwelle 13 ermöglicht.

Die Schneidsätze 15, 16 bzw. die Kreismesser 17 und die Zwischenelemente 18, 19 der Schneidsätze 15, 16 sind in ihrer Breite so aufeinander abgestimmt, dass sich bezogen auf die jeweils durch den Anschlagbund 21 ausgebildete Bezugskante 20 zwischen sämtlichen Kreismesserpaarungen 28, 29, 30 und 31 im Rahmen der zugelassenen Toleranzen eine übereinstimmende Spaltbreite s der Schneidspalte 26 einstellt.

Wie sich nun aus der Darstellung in **Fig. 1** ergibt, führt ein relativer axialer Versatz dx der Messerwelle 13 gegenüber der Messerwelle 12 zu einer entsprechenden Änderung dx der Spaltbreiten s der einzelnen zwischen den Kreismessern 17 der Kreismesserpaarungen 28 bis 31 ausgebildeten Schneidspalte 26, wobei die Spaltbreite bei den Kreismesserpaarungen 28 und 30 um den axiale Versatz dx vergrößert wird, also s + dx, und die Spaltbreite bei den Kreismesserpaarungen 29 und 31 um den axialen Versatz dx verkleinert wird, also s - dx.

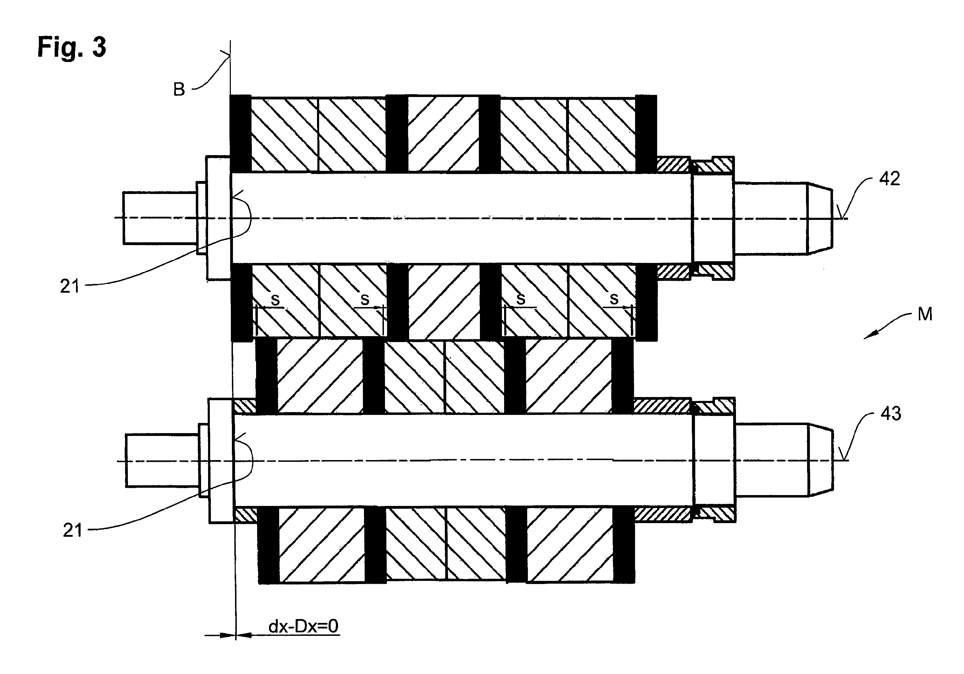

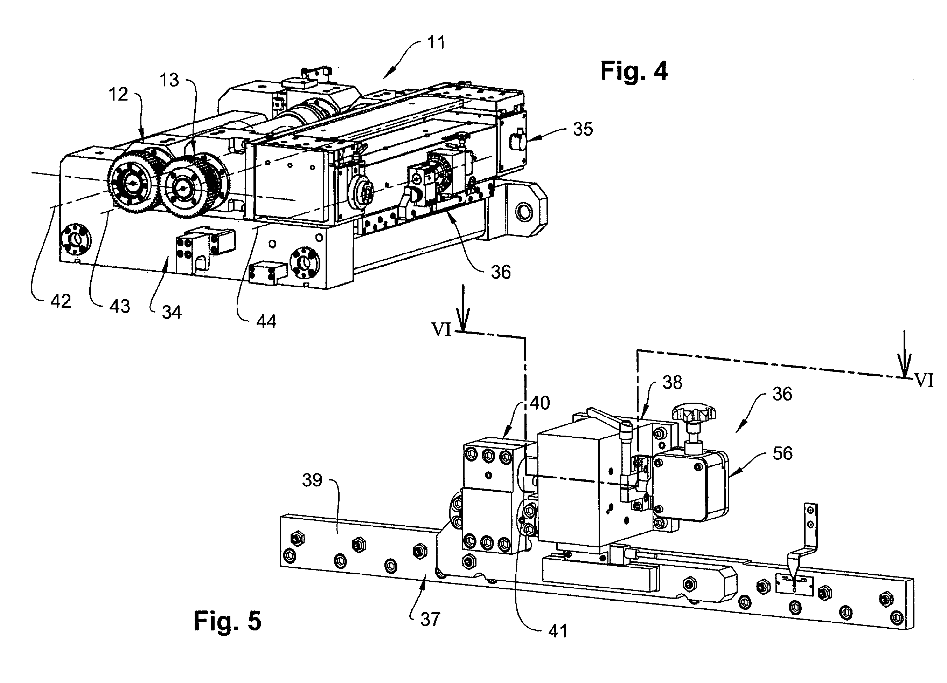

Bei der in **Fig. 3** dargestellten Ausführungsform der Erfindung wird der axiale Versatz dx der Messerwelle 13 gegenüber der Messerwelle 12 mittels einer in **Fig. 4 bis 6** dargestellten Stelleinrichtung 36 eine dem axialen Versatz dx entsprechende axiale Rückstellung -Dx der Messerwelle 13 zur Kompensation des axialen Versatzes dx überlagert, so dass sich die Bezugskanten 20 der Anschlagbünde 21 der Messerwellen 12, 13 in einer gemeinsamen, senkrecht zu einer durch die Anordnung von Messerwellenachsen 42, 43 definierten Messerwellenebene M orientierten Bezugsebene B befinden, also gilt: dx - Dx = 0, oder dass die unter Berücksichtigung der Fertigungstoleranzen der einzelnen Bauteile der Messerwellen 12, 13 und der sich daraus ergebenden Maßketten an den einzelnen Kreismesserpaarungen 28 bis 31 tatsächlich unterschiedlich groß ausgebildeten Spaltbreitendifferenzen vermittelt werden, also nicht eine axiale Rückstellung der Messerwelle 13 um den Betrag |dx|, sondern um einen Betrag erfolgt, derart, dass eine möglichst an sämtlichen Kreismesserpaarungen 28 bis 31 übereinstimmende Spaltbreitendifferenz erreicht wird.

**Fig. 4** zeigt die Schneidvorrichtung 11 mit der Messerwelle 12 und der Messerwelle 13, wobei die Messerwelle 12 auf einem Schneidgestell 34 gelagert ist und die Messerwelle 13 auf einem Messerwellenträger 35 gelagert ist, der seinerseits mittels einer Stelleinrichtung 36 gegenüber dem Schneidgestell 34 axial verfahrbar ist.

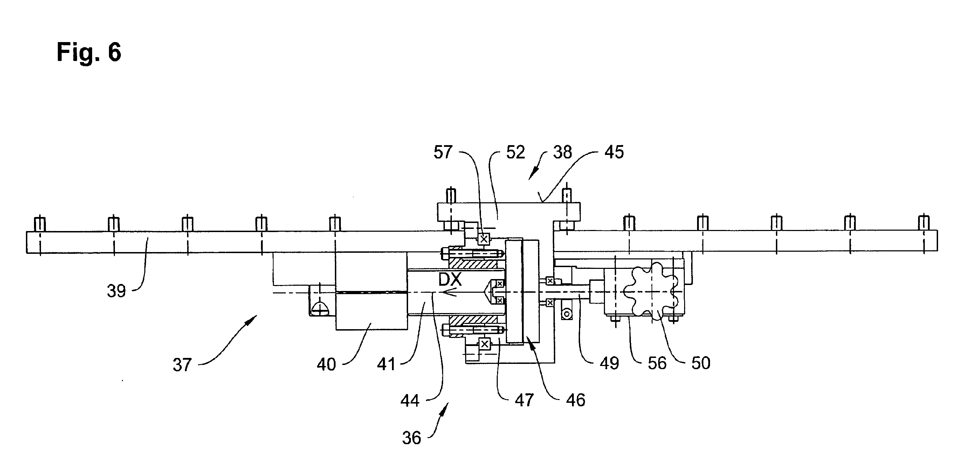

Die in den **Fig. 5** und **6** dargestellte Stelleinrichtung 36 weist einen ersten, an dem Schneidgestell 34 angeordneten Stellanschlag 37 und einen zweiten an dem Messerwellenträger 35 angeordneten Stellanschlag 38 auf. Der Stellanschlag 37 ist über eine Anschlussleiste 39 starr mit dem Schneidgestell 34 verbunden und weist in einem Klemmflansch 40 aufgenommen eine Stellspindel 41 auf, deren Spindelachse 44 sich parallel zu den Messerwellenachsen 42 und 43 der Messerwellen 12 und 13 **(****Fig. 4****)** erstreckt. Der zweite Stellanschlag 38 ist über eine Anschlussplatte 45 starr mit dem Messerwellenträger 35 verbunden und weist eine mittels eines Stellgetriebes 46 angetriebene Spindelmutter 47 auf, wobei das Stellgetriebe 46 auf seiner Antriebsseite mit einer durch ein Handrad 50 betätigbaren Antriebswelle 49 verbunden ist.

Aus der Darstellung gemäß **Fig**. **5** wird nachvollziehbar, dass eine Drehung des Handrads 50 über eine Kegelradgetriebestufe 56 auf die Antriebswelle 49 des Stellgetriebes 46 übertragen und durch die an ihrem Umfang in einem Gehäuse 52 des Stellanschlags 38 in einem Radiallager 57 gelagerte Spindelmutter 47 in eine axiale Verstellung Dx der Stellspindel 41 gewandelt wird, mit der Folge, dass der Stellanschlag 38 um einen entsprechenden Verfahrweg dx gegenüber dem Stellanschlag 37 in Richtung der Spindelachse 44 verfahren wird.

Diese axiale Verstellung Dx wird über den Messerwellenträger 35 auf die Messerwelle 13 übertragen, mit der Folge, dass die Bezug nehmend auf **Fig. 3** erläuterte Rückstellung -Dx zum Ausgleich des axialen Versatzes dx erfolgt.

## Patentansprüche

1. Vorrichtung zum Längsteilen einer zwischen einer ersten und einer zweiten Messerwelle (12, 13) durchlaufenden Materialbahn (61), wobei die Messerwellen jeweils auf einem Grundkörper (14) mit mindestens zwei durch zumindest ein Zwischenelement (18, 19) voneinander beabstandeten Kreismessern (17) bestückt sind, wobei die axiale Position der Kreismesser auf den Messerwellen durch ihren Abstand von einem Anschlagbund (21) der Messerwellen definiert ist, und die Messerwellen so zueinander positioniert sind, dass jeweils zwei einander zugeordnete Kreismesser einer Kreismesserpaarung durch den axialen Abstand benachbarter Schneidkanten (24, 25) der Kreismesser einen Schneidspalt (26) definierter Spaltbreite s ausbilden, derart, dass in axialer Richtung der Messerwellen zwei voneinander beabstandete Schneidspalte eine Bahnbreite eines durch Längsteilung der Materialbahn gebildeten Bahnstreifens definieren,
**dadurch gekennzeichnet,**
**dass** die erste Messerwelle auf einem Schneidgestell (34) und die zweite Messerwelle auf einem gegenüber dem Schneidgestell axial verstellbaren Messerwellenträger (35) angeordnet ist, wobei zwischen dem Schneidgestell und dem Messerwellenträger eine Stelleinrichtung (36) angeordnet ist, mit einem ersten, an dem Schneidgestell angebrachten Stellanschlag (37), einem zweiten, am Messerwellenträger angebrachten Stellanschlag (38) und einem zwischen den Stellanschlägen wirksamen Stellelement, mit dem der Abstand zwischen den Stellanschlägen derart veränderbar ist, dass Bezugskanten (20) der Anschlagbünde (21) der Messerwellen axial gegeneinander verstellbar sind.

2. Vorrichtung nach Anspruch 1,
**dadurch gekennzeichnet**
**dass** der Abstand zwischen den Stellanschlägen (37, 38) derart veränderbar ist, dass die Bezugskanten (20) in einer gemeinsamen, senkrecht zu einer Messerwellenebene M orientierten Bezugsebene B angeordnet sind.

3. Vorrichtung nach Anspruch 1 oder 2,
**dadurch gekennzeichnet**
**dass** das Stellelement aus einer drehfest am ersten Stellanschlag (37) angeordneten Stellspindel (41) besteht, die mittels einer im zweiten Stellanschlag (38) drehbar gelagerten Spindelmutter (47) antreibbar ist.

4. Vorrichtung nach Anspruch 3,
**dadurch gekennzeichnet**
**dass** die Stellspindel (41) mit einem axialen Ende drehfest mit dem ersten Stellanschlag (37) verbunden ist und mit dem anderen axialen Ende drehbar auf einer koaxial zur Spindelmutter angeordneten Antriebswelle (49) eines am zweiten Stellanschlag (38) angeordneten, die Spindelmutter antreibenden Stellgetriebes (46) angeordnet ist.

5. Vorrichtung nach Anspruch 4,
**dadurch gekennzeichnet**
**dass** die drehfeste Verbindung der Stellspindel (41) mit dem ersten Stellanschlag (37) als lösbare Klemmverbindung ausgebildet ist.

6. Vorrichtung nach einem der vorangehenden Ansprüche,
**dadurch gekennzeichnet**
**dass** die Länge der axialen Gewindeüberdeckung zwischen der Stellspindel (41) und der Stellmutter zumindest 80 Prozent des Durchmessers der Stellspindel beträgt.

7. Verfahren zum Längsteilen einer zwischen einer ersten und einer zweiten Messerwelle (12, 13) durchlaufenden Materialbahn, wobei die Messerwellen jeweils auf einem Grundkörper (14) mit mindestens zwei durch zumindest ein Zwischenelement (18, 19) voneinander beabstandeten Kreismessern (17) bestückt sind, wobei die Einstellung eines Schneidspaltes (26) definierter Spaltbeite s zwischen zwei einander zugeordneten Kreismessern einer Kreismesserpaarung durch die Einstellung des axialen Abstands benachbarter Schneidkanten (24, 25) der Kreismesser erfolgt, derart, dass in axialer Richtung der Messerwellen zwei voneinander beabstandete Schneidspalte eine Bahnbreite eines durch Längsteilung der Materialbahn gebildeten Bahnstreifens definieren, wobei zum Ausgleich einer zwischen den Schneidspalten festgestellten Spaltbreitendifferenz mittels einer axialen Stelleinrichtung (36) eine relative axiale Verstellung Dx der ersten Messerwelle (12) gegenüber der zweiten Messerwelle (13) erfolgt, derart, dass die Spaltbreitendifferenz innerhalb eines definierten Toleranzbereichs liegt,
**dadurch gekennzeichnet,**
**dass** die axiale Verstellung Dx derart erfolgt, dass ein Messerwellenträger (35), auf dem die zweite Messerwelle (13) angeordnet ist, mittels der Stelleinrichtung (36) gegenüber einem Schneidgestell (34), auf dem die erste Messerwelle (12) angeordnet ist, axial verfahren wird.

8. Verfahren nach Anspruch 7,
**dadurch gekennzeichnet**
**dass** das axiale Verfahren des Messerwellenträgers (35) gegenüber dem Schneidgestell (34) derart erfolgt, dass der Abstand zwischen einem ersten, an dem Schneidgestell angebrachten Stellanschlag (37) und einem zweiten, am Messerwellenträger (35) angebrachten Stellanschlag (38) mittels eines zwischen den Stellanschlägen wirksamen Stellelements der Stelleinrichtung (36) eingestellt wird.

## Claims

1. A device for longitudinally cutting up a material web (61) passing through between a first and a second blade shaft (12, 13), wherein the blade shafts in each instance, on a base body (14), are assembled with at least two circular blades (17) being spaced apart from one another by one intermediate member (18, 19) at the very least, wherein the axial position of the circular blades on the blade shafts is defined by their distance from a stop collar (21) of the blade shafts, and the blade shafts are positioned with respect to each other such that two circular blades being associated with each other and pertaining to a circular blade pairing in each instance configure a cutting gap (26) having a defined gap width s by way of the axial distance of adjacent cutting edges (24, 25) of the circular blades, in such a manner that, in the axial direction of the blade shafts, two cutting gaps being spaced apart from each other define a web width of a web strip having been formed by way of longitudinally cutting up the material web,
**characterised in that**
the first blade shaft is disposed on a cutting framework (34) and the second blade shaft is disposed on a blade shaft support (35) being axially displaceable as against the cutting framework, wherein an adjustment means (36) is disposed between the cutting framework and the blade shaft support, having a first adjustment stop (37) being attached to the cutting framework, a second adjustment stop (38) being attached to the blade shaft support and an adjustment member being active between the adjustment stops, with which member the distance between the adjustment stops can be changed in such a manner that reference edges (20) of the stop collars (21) of the blade shafts can be displaced axially with respect to each other.

2. The device according to claim 1,
**characterised in that**
the distance between the adjustment stops (37, 38) can be changed in such a manner that the reference edges (20) are disposed in a common reference plane B being oriented so as to be vertical to a blade shaft plane M.

3. The device according to claim 1 or 2,
**characterised in that**
the adjustment member consists of an adjustment spindle (41) which is disposed torsionally stiff at the first adjustment stop (37), and which can be driven by means of a spindle nut (47) being mounted in the second adjustment stop (38) so as to be rotatable.

4. The device according to claim 3,
**characterised in that**
the adjustment spindle (41), with one axial end, is connected torsionally stiff to the first adjustment stop (37) and, with the other axial end, is disposed on a drive shaft (49) so as to be rotatable, said drive shaft being disposed coaxially with respect to the spindle nut and pertaining to an adjustment gear (46) that is disposed at the second adjustment stop (38) and that drives the spindle nut.

5. The device according to claim 4,
**characterised in that**
the torsionally stiff connection of the adjustment spindle (41) and the first adjustment stop (37) is configured as a releasable clamp connection.

6. The device according to any one of the preceding claims,
**characterised in that**
the length of the axial thread engagement between the adjustment spindle (41) and the adjustment nut at the very least amounts to 80 percent of the diameter of the adjustment spindle.

7. A method for longitudinally cutting up a material web passing through between a first and a second blade shaft (12, 13), wherein the blade shafts in each instance, on a base body (14), are assembled with at least two circular blades (17) being spaced apart from one another by one intermediate member (18, 19) at the very least, wherein a cutting gap (26) having a defined gap width s and being located between two circular blades that are associated with each other and that pertain to a circular blade pairing is set by way of the setting of the axial distance of adjacent cutting edges (24, 25) of the circular blades, in such a manner that, in the axial direction of the blade shafts, two cutting gaps being spaced apart from each other define a web width of a web strip having been formed by way of longitudinally cutting up the material web, wherein, for equalising a gap width difference having been determined between the cutting gaps, a relative axial displacement Dx of the first blade shaft (12) as against the second blade shaft (13) is effected by means of an axial adjustment means (36), in such a manner that the gap width difference is within a defined tolerance range,
**characterised in that**
the axial displacement Dx is effected in such a manner that a blade shaft support (35), on which the second blade shaft (13) is disposed, is axially advanced as against a cutting framework (34), on which the first blade shaft (12) is disposed, by means of the adjustment means (36).

8. The method according to claim 7,
**characterised in that**
the blade shaft support (35) is axially advanced as against the cutting framework (34) in such a manner that the distance between a first adjustment stop (37) being attached to the cutting framework and a second adjustment stop (38) being attached to the blade shaft support (35) is set by means of an adjustment member of the adjustment means (36), said member being active between the adjustment stops.

## Revendications

1. Dispositif permettant de découper en longueur une bande (61) de matériau parcourant entre un premier et un deuxième arbre (12, 13) de lame, dans lequel les arbres de lame chaque fois, sur un corps de base (14), sont équipés d'au moins deux lames circulaires (17) étant espacées l'une de l'autre par un élément (18, 19) intermédiaire pour le moins, dans lequel la position axiale des lames circulaires sur les arbres de lame est définie par leur distance par rapport à un épaulement (21) de butée des arbres de lame, et les arbres de lame sont positionnés l'un par rapport à l'autre tellement que deux lames circulaires d'un appariement de lames circulaires, étant associées l'une à l'autre, chaque fois constituent un entrefer (26) de coupe ayant une largeur d'entrefer s définie, par la distance axiale des bordures (24, 25) de coupe adjacentes des lames circulaires, de telle manière que, dans la direction axiale des arbres de lame, deux entrefers de coupe étant espacés l'un de l'autre définissent une largeur de bande d'une bande étant formée par découpage en longueur de la bande de matériau,
**caractérisé en ce que**
le premier arbre de lame est disposé sur un châssis (34) de coupe et le deuxième arbre de lame est disposé sur un support (35) d'arbre de lame étant réglable axialement par comparaison avec le châssis de coupe, dans lequel un équipement (36) régulateur est disposé entre le châssis de coupe et le support d'arbre de lame, ayant une première butée (37) régulatrice étant attachée au châssis de coupe, une deuxième butée (38) régulatrice étant attachée au support d'arbre de lame et un élément régulateur étant actif entre les butées régulatrices, la distance entre les butées régulatrices pouvant être modifiée moyennant ledit élément de telle manière que des bordures (20) de référence des épaulements (21) de butée des arbres de lame sont réglables axialement l'une par rapport à l'autre.

2. Dispositif selon la revendication 1,
**caractérisé en ce que**
la distance entre les butées (37, 38) régulatrices peut être modifiée de telle manière que les bordures (20) de référence sont disposées dans un plan de référence B commun étant orienté perpendiculairement à un plan d'arbre de lame M.

3. Dispositif selon la revendication 1 ou 2,
**caractérisé en ce que**
l'élément régulateur consiste en une broche régulatrice (41) qui est disposée de façon à être rigide en rotation à la première butée (37) régulatrice, et qui peut être entraînée au moyen d'un écrou (47) de broche étant supporté dans la deuxième butée (38) régulatrice de façon à pouvoir tourner.

4. Dispositif selon la revendication 3,
**caractérisé en ce que**
la broche (41) régulatrice, avec une extrémité axiale, est reliée à la première butée (37) régulatrice de façon à être rigide en rotation et, avec l'autre extrémité axiale, est disposée sur un arbre (49) d'entraînement de façon à pouvoir tourner, ledit arbre d'entraînement étant disposé coaxialement par rapport à l'écrou de broche et appartenant à une transmission (46) régulatrice qui est disposée à la deuxième butée (38) régulatrice et qui entraîne l'écrou de broche.

5. Dispositif selon la revendication 4,
**caractérisé en ce que**
la relation rigide en rotation de la broche (41) régulatrice et de la première butée (37) régulatrice est constituée comme une relation par serrage détachable.

6. Dispositif selon l'une quelconque des revendications précédentes,
**caractérisé en ce que**
la longitude du filetage axial entre la broche (41) régulatrice et l'écrou de broche pour le moins se monte à 80 pour cent du diamètre de la broche régulatrice.

7. Procédé permettant de découper en longueur une bande de matériau parcourant entre un premier et un deuxième arbre (12, 13) de lame, dans lequel les arbres de lame chaque fois, sur un corps de base (14), sont équipés d'au moins deux lames circulaires (17) étant espacées l'une de l'autre par un élément (18, 19) intermédiaire pour le moins, dans lequel un entrefer (26) de coupe ayant une largeur d'entrefer s définie et étant situé entre deux lames circulaires d'un appariement de lames circulaires, étant associées l'une à l'autre, est adapté par l'adaptation de la distance axiale des bordures (24, 25) de coupe adjacentes des lames circulaires, de telle manière que, dans la direction axiale des arbres de lame, deux entrefers de coupe étant espacés l'un de l'autre définissent une largeur de bande d'une bande étant formée par découpage en longueur de la bande de matériau, dans lequel, pour compenser une différence de largeur d'entrefer ayant été identifiée entre les entrefers de coupe, un réglage axial relatif Dx du premier arbre (12) de lame par comparaison avec le deuxième arbre (13) de lame est effectué au moyen un équipement (36) régulateur axial, de telle manière que la différence de largeur d'entrefer se situe dans une région de tolérance définie,
**caractérisé en ce que**
le réglage axial Dx est effectué de telle manière qu'un support (35) d'arbre de lame, le deuxième arbre (13) de lame étant disposé sur ledit support, est axialement déplacé par comparaison avec un châssis (34) de coupe, le premier arbre (12) de lame étant disposé sur ledit châssis, au moyen de l'équipement (36) régulateur.

8. Procédé selon la revendication 7,
**caractérisé en ce que**
le support (35) d'arbre de lame est déplacé axialement par comparaison avec le châssis (34) de coupe, de telle manière que la distance entre une première butée (37) régulatrice étant attachée au châssis de coupe et une deuxième butée (38) de coupe étant attachée au support (35) d'arbre de lame est adaptée au moyen d'un élément régulateur de l'équipement (36) régulateur, ledit élément étant actif entre les butées régulatrices.
